# EUROPEAN PATENT APPLICATION

(11) **EP 3 760 052 A1**
(43) Date of publication of application: **06.01.2021**
(21) Application number: 18908248.0
(22) Date of filing: 05.11.2018
(51) Int. Cl.: A23L 27/00, A23L 5/00

(54) **SPRAY-DRIED COMPOSITION**

(30) Priority: 28.02.2018 JP 2018034150
(71) Applicant: Takasago International Corporation, Tokyo 144-8721 (JP)
(72) Inventor: HIRAI, Nobuhisa, Hiratsuka-shi, Kanagawa 254-0073 (JP)
(74) Representative: Zimmermann & Partner Patentanwälte mbB
(86) International application number: PCT/JP2018/040991
(87) International publication number: WO 2019/167347

(57) **Abstract**

This spray-dried composition comprises (A), (B), and (C):(A) at least one selected from flavoring ingredients and food ingredients;(B) at least one selected from excipients and combinations of excipients with emulsifiers; and(C) a sodium salt(s).

## Description

### Technical Field

The present invention relates to a method of producing a powder composition capable of stably retaining a flavor and a fragrance excellent in palatability over a long period of time, and a food containing the powder composition.

### Background Art

Powdered flavors are widely used, for example, for flavoring food, and many production methods thereof have been reported. Known typical production methods include a method in which a flavor is added to a mixture composed of an emulsifier and an excipient, and then the obtained emulsified composition is dried to produce a powdered flavor, a method in which a flavor is added to gum arabic or the like, and then the obtained emulsified composition is dried to produce a powdered flavor, and the like. However, the powdered flavors obtained by these methods are not sufficiently satisfactory in fragrance characteristics such as the retention and stability of fragrance and the development of fragrance. As solutions for the retention and stability of fragrance, techniques of allowing the coexistence of a powdered flavor with oligosaccharides such as trehalose, cellobiose, and maltose have been reported (Japanese Patent Application Publication Nos. Hei 09-107911, 2011-026411, and 2001-061435). Although these techniques have significantly improved the retention and stability of fragrance, it has been desired to develop a powdered flavor having further improved fragrance characteristics.

As for a powdered flavor with improved fragrance characteristics, it has also been reported that use of a desalinated emulsifier enables the powdered flavor to stably retain its flavor for a long period of time (Japanese Patent Application Publication No. 2001-064667).

### Summary of Invention

An object of the present invention is to provide a powder composition which makes it possible to stably retain a flavor and a fragrance excellent in palatability over a long period of time.

The present invention relates to the following [1] to [7].
[1] A spray-dried composition comprising the following (A), (B), and (C):
   (A) one or more selected from flavors and food ingredients;
   (B) one or more selected from excipients and combinations of excipients and emulsifiers; and
   (C) a sodium salt(s).
[2] The spray-dried composition according to [1], further comprising (D) one or more selected from oligosaccharides and sugar alcohols produced by reduction of oligosaccharides.
[3] The spray-dried composition according to [2], wherein the oligosaccharides and the sugar alcohols produced by reduction of oligosaccharides are disaccharides, trisaccharides, or sugar alcohols produced by reduction of disaccharides or trisaccharides.
[4] The spray-dried composition according to any one of [1] to [3], wherein the sodium salt(s) is at least one selected from the group consisting of sodium chloride, trisodium citrate, sodium ascorbate, sodium gluconate, sodium glutamate, sodium succinate, sodium acetate, sodium lactate, sodium malate, sodium tartrate, sodium fumarate, and sodium erythorbate.
[5] The spray-dried composition according to any one of [1] to [4], wherein a composition ratio of sodium in the spray-dried composition is 0.3% by weight to 10% by weight.
[6] A method of producing the spray-dried composition according to any one of [1] to [5], comprising: homogeneously dissolving (A), (B), (C), and (D) in water.
[7] A food or drink comprising the spray-dried composition according to any one of [1] to [5].

The spray-dried composition of the present invention makes it possible to obtain a spray-dried composition having stable quality over a long period of time using an inexpensive and easily available sodium salt(s). In addition, the spray-dried composition obtainable by the present invention is a spray-dried composition that does not at all impair the fragrance characteristics and taste characteristics of the flavors and food ingredients contained therein and that does not affect the taste characteristics of the food or drink when the composition is added to the food or drink.

### Description of Embodiments

Hereinafter, the present invention is described in detail.

As the flavor mentioned in the present invention, anything can be employed as long as it is already used in the production of powdered flavors. That is, anything used in the production of powdered flavors can be used, including synthetic flavors such as citral, geraniol, 1-menthol, and vanillin, animal flavors such as meat and extracts of marine products, vegetable flavors such as essential oils and oleoresins, blended flavors obtained by appropriately selecting and mixing from those flavors, and the like. In addition, for example, it is possible to use citrus-based flavors such as orange, lemon, and grapefruit, fruit-based flavors such as apple, banana, grape, peach, strawberry, melon, and pineapple, mint-based flavors such as peppermint and spearmint, spice-based flavors such as pepper, cinnamon, nutmeg, and cloves, nut-based flavors such as vanilla, coffee, cocoa, and hazelnut, meat- and fish-based flavors such as beef, pork, chicken, salmon, crab, and shrimp, tea-based flavors such as black tea and green tea, and dairy flavors such as milk and cheese. Note that, naturally, the flavor is not limited to these.

The amount of flavor used depends on the type of the flavor, the intensity of the odor, and the purpose of using the powdered flavor, and is usually 0.5 to 40% by weight, and preferably 1 to 25% by weight, based on the solid content of the spray-dried composition.

The food ingredients in the present invention include pigments, acidulants, spices, and functional ingredients.

As the pigments, any conventionally known pigment can be used. Specific examples of the pigments can include, for example, oil-soluble natural pigments such as β-carotene, paprika pigment, annatto pigment, and chlorophyll, and further, natural pigments such as turmeric pigment, caramel pigment, cochineal pigment, and grape skin extract, and the like.

Any acidulant may be used as long as it is commonly used in foods. Specific and typical examples of these known acidulants include, for example, citric acid, malic acid, ascorbic acid, succinic acid, fumaric acid, and the like.

Any spice may be used as long as it is conventionally used as a spice. Examples of the spices can include, for example, powders of natural spices such as pepper, clove, and mace, and blended products thereof.

Examples of the functional ingredients include polyphenols such as perilla extract and buckwheat, propolis, royal jelly, and the like.

The amount of the food ingredients used is 0.5 to 40% by weight, and preferably 1 to 25% by weight, based on the solid content of the spray-dried composition.

The excipient in the present invention is an essential component for forming a spray-dried composition, and is a commonly used component for producing a powdered flavor. It can be roughly divided into emulsifying excipients and other excipients, but sometimes the former cannot be clearly distinguished from the latter. The former emulsifying excipient means an excipient that also has a function as an emulsifier, and examples thereof include gum arabic, modified starch, α-cyclodextrin, β-cyclodextrin, γ-cyclodextrin, branched cyclodextrin, soybean polysaccharides, gelatin, and the like. In particular, gum arabic, modified starch, and the like are preferable. As the latter excipient, dextrin, skim milk powder, and the like are suitable.

In the case of using an excipient other than these latter emulsifying excipients, it is necessary to additionally use an emulsifying excipient or an emulsifier in combination.

The above emulsifiers include fatty acid monoglycerides, fatty acid diglycerides, fatty acid triglycerides, propylene glycol fatty acid esters, sucrose fatty acid esters, polyglycerin fatty acid esters, lecithins, sorbitan fatty acid esters, Quillaia extracts, caseins, enzyme-treated lecithins, polysorbates, polypropylene glycol fatty acid esters, and the like. In particular, polyglycerin fatty acid esters, sucrose fatty acid esters, lecithins, Quillaia extracts, and enzyme-treated lecithins are preferable.

One of the above excipients and emulsifiers may be used, but two or more thereof may be used.

The amount of the emulsifying excipient or other excipients used varies depending on what is employed and the flavor added, and is 2 to 20 parts by weight, and preferably 3 to 16 parts by weight, based on 1 part by weight of the flavor, and is 5 to 80% by weight of the entire spray-dried composition. If the amount used is too small, the coating of the flavor cannot be sufficient, and if it is more than necessary, the invented product is not preferable in terms of sensory evaluation when perfuming the final product.

The amount of the emulsifier used varies depending on the amount of the flavor added and the type and combination of excipients and emulsifiers, and is, for example, usually in the range of 0.01 to 10 parts by weight, and preferably 0.1 to 7 parts by weight, based on 1 part by weight of the fragrance.

The sodium salt(s) in the present invention is preferably a sodium salt(s) having a small molecular weight because, when the molecular weight is large, the relative sodium content becomes small, and addition of sodium salt(s) in an amount necessary for obtaining the effect of the present invention may result in affecting the taste of the final product and the physical properties of the powder composition. Examples include sodium chloride, trisodium citrate, sodium ascorbate, sodium gluconate, sodium glutamate, sodium succinate, sodium acetate, sodium lactate, sodium malate, sodium tartrate, sodium fumarate, or sodium erythorbate. Trisodium citrate, sodium gluconate, or sodium chloride is preferable, and trisodium citrate or sodium chloride is particularly preferable.

Regarding the amount of the contained sodium salt(s) used, the sodium content in the solid content of the spray-dried composition may be usually 0.01% by weight to 30% by weight, preferably 0.1% by weight to 20% by weight, and particularly preferably 0.3% by weight to 10% by weight.

When the sodium salt(s) is sodium chloride, the content of sodium chloride in the solid content of the spray-dried composition is preferably in the range of 0.5 to 25% by weight, and particularly preferably in the range of 1 to 10% by weight.

When the sodium salt(s) is trisodium citrate, the content of trisodium citrate in the solid content of the spray-dried composition is preferably in the range of 0.5 to 25% by weight, and particularly preferably in the range of 2 to 20% by weight.

The oligosaccharides or the sugar alcohols produced by reduction of oligosaccharides in the present invention are not particularly limited, but the oligosaccharides are preferably disaccharides or trisaccharides, and specific examples thereof can include maltose, cellobiose, trehalose, palatinose, and raffinose. The sugar alcohols are preferably sugar alcohols produced by reduction of disaccharides or trisaccharides, and specific examples thereof can include Palatinit, xylitol, sorbitol, erythritol, and psicose. Among these, palatinose, Palatinit, and raffinose are preferable, and palatinose is particularly preferred.

The amount of oligosaccharide or sugar alcohol used varies depending on the type of oligosaccharide and sugar alcohol used, and the minimum amount added necessary for obtaining the addition effect of oligosaccharide must be 5% by weight in the spray-dried composition (in terms of solid content). In addition, the upper limit of the amount added is 90% by weight for raffinose and 70% by weight for palatinose, for example. This upper limit is the amount required to maintain the form as a spray-dried composition.

In the present invention, it is usually important to allow water to coexist with the composition of each of the above components. The blending ratio of water varies depending on the components constituting the composition. In the case of using a spray drier and performing spray drying under the conditions at an inlet temperature of 150°C to 180°C and an outlet temperature of 70°C to 110°C, the water content in this case is usually such that the solid content of the powdered flavor is 20 to 50%, and further preferably 30 to 40%. Note that water does not have to actively coexist depending on the flavor used, such as a palatable beverage flavor.

The amount of the spray-dried composition of the present invention is, for example, 0.01 to 50% by weight, preferably 0.03 to 10% by weight, and further preferably 0.05 to 1% by weight, based on the weight of the food or drink.

As a method of producing the spray-dried composition, a method known before the present application can be employed. Here, a typical production method is described, but the present invention is not limited to this method. To explain a specific example, first, water, an excipient and an oligosaccharide selected from the above group, and if necessary, an emulsifier, a water-soluble antioxidant, and other water-soluble substances are mixed and heat-sterilized. Next, a pre-weighed flavor, and if necessary, an oil-soluble antioxidant, and other oil-soluble substances are added, and the mixture is stirred and mixed for emulsification using a mixer such as a TK mixer. Subsequently, the emulsion solution is spray-dried with a spray drier, and then sieving is performed to obtain a spray-dried composition.

In addition to the TK mixer, the emulsification step may use a colloid mill, a high shear mixer, a high-pressure homogenizer, or the like.

In addition, the drying step is not limited to a spray dryer, and may be one that includes a drying step involving spraying. A fluidized-bed granulating dryer, a fluidized-bed coating apparatus, or the like may be used.

These spray-dried compositions can be blended in food. The food for blending is not particularly limited, and the examples of use are wide, such as beverages, powdered drinks, confectionery products such as candies, chewing gums, tablet confections, and chocolates, yogurt, desserts such as ice creams, meat and fish products, and cooked foods compatible with microwave ovens (frozen and retort foods). The amount of the powdered flavor perfumed to food greatly varies depending on the type of powdered flavor and the food or drink added. Preferably, the flavor is generally in the range of 0.1 to 5% by weight, and preferably 0.5 to 3.0% by weight, based on the food or drink. The method of perfuming is performed by a known method.

### [Examples]

### <Example 1>

To 233 g of water, 5 g of gum arabic, 75 g of dextrin, 5 g of palatinose, and 5 g of sodium chloride were added, and dissolved and sterilized at 85°C. This was cooled to 45°C, then 10 g of lemon flavor was added, and the mixture was stirred at 9000 rpm for 10 minutes using a TK mixer (manufactured by PRIMIX Corporation) to perform emulsifying treatment. The obtained emulsion was spray-dried with a spray dryer (manufactured by OHKAWARA KAKOHKI CO., LTD.) under the conditions of an inlet temperature of 170°C and an outlet temperature of 80°C to obtain a lemon powdered flavor.

### <Example 2>

To 233 g of water, 5 g of gum arabic, 71.5 g of dextrin, 5 g of palatinose, and 8.5 g of trisodium citrate were added, and dissolved and sterilized at 85°C. This was cooled to 45°C, then 10 g of lemon flavor was added, and thereafter, the same operation as in Example 1 was performed to obtain a lemon powdered flavor.

### <Example 3>

To 233 g of water, 5 g of gum arabic, 75 g of dextrin, 5 g of Palatinit, and 5 g of sodium chloride were added, and dissolved and sterilized at 85°C. This was cooled to 45°C, then 10 g of lemon flavor was added, and thereafter, the same operation as in Example 1 was performed to obtain a lemon powdered flavor.

### <Example 4>

To 233 g of water, 5 g of desalinated gum arabic (San Arabic, manufactured by Sanei-Yakuhin Co., Ltd.), 75 g of dextrin, 5 g of palatinose, and 5 g of sodium chloride were added, and dissolved and sterilized at 85°C. This was cooled to 45°C, then 10 g of lemon flavor was added, and thereafter, the same operation as in Example 1 was performed to obtain a lemon powdered flavor.

### <Example 5>

To 233 g of water, 5 g of modified starch, 75 g of dextrin, 5 g of palatinose, and 5 g of sodium chloride were added, and dissolved and sterilized at 85°C. This was cooled to 45°C, then 10 g of lemon flavor was added, and thereafter, the same operation as in Example 1 was performed to obtain a lemon powdered flavor.

### <Example 6>

To 233 g of water, 1.5 g of sucrose fatty acid ester (DK Ester F-160, manufactured by DKS Co. Ltd.), 78.5 g of dextrin, 5 g of palatinose, and 5 g of sodium chloride were added, and dissolved and sterilized at 85°C. This was cooled to 45°C, then 10 g of lemon flavor was added, and thereafter, the same operation as in Example 1 was performed to obtain a lemon powdered flavor.

### <Comparative Example 1>

To 233 g of water, 5 g of gum arabic and 85 g of dextrin were added, and dissolved and sterilized at 85°C. This was cooled to 45°C, then 10 g of lemon flavor was added, and thereafter, the same operation as in Example 1 was performed to obtain a lemon powdered flavor.

### <Comparative Example 2>

To 233 g of water, 5 g of desalinated gum arabic (San Arabic, manufactured by Sanei-Yakuhin Co., Ltd.) and 85 g of dextrin were added, and dissolved and sterilized at 85°C. This was cooled to 45°C, then 10 g of lemon flavor was added, and thereafter, the same operation as in Example 1 was performed to obtain a lemon powdered flavor.

### <Example 7>

To 233 g of water, 6 g of gum arabic, 82 g of dextrin, 5 g of palatinose, and 5 g of sodium chloride were added, and dissolved and sterilized at 85°C. This was cooled to 45°C, then 2 g of yuzu flavor was added, and the mixture was stirred at 9000 rpm for 10 minutes using a TK mixer (manufactured by PRIMIX Corporation) to perform emulsifying treatment. The obtained emulsion was spray-dried with a spray dryer (manufactured by OHKAWARA KAKOHKI CO., LTD.) under the conditions of an inlet temperature of 170°C and an outlet temperature of 80°C to obtain a yuzu powdered flavor.

### <Comparative Example 5>

To 233 g of water, 6 g of gum arabic and 92 g of dextrin were added, and dissolved and sterilized at 85°C. This was cooled to 45°C, then 2 g of yuzu flavor was added, and thereafter, the same operation as in Example 7 was performed to obtain a yuzu powdered flavor.

### <Example 8>

To 233 g of water, 9 g of gum arabic, 72 g of dextrin, 5 g of palatinose, and 5 g of sodium chloride were added, and dissolved and sterilized at 85°C. This was cooled to 45°C, then 9 g of coffee flavor was added, and the mixture was stirred at 9000 rpm for 10 minutes using a TK mixer (manufactured by PRIMIX Corporation) to perform emulsifying treatment. The obtained emulsion was spray-dried with a spray dryer (manufactured by OHKAWARA KAKOHKI CO., LTD.) under the conditions of an inlet temperature of 170°C and an outlet temperature of 80°C to obtain a coffee powdered flavor.

### <Comparative Example 6>

To 233 g of water, 9 g of gum arabic and 82 g of dextrin were added, and dissolved and sterilized at 85°C. This was cooled to 45°C, then 9 g of coffee flavor was added, and thereafter, the same operation as in Example 8 was performed to obtain a coffee powdered flavor.

### <Example 9>

To 233 g of water, 10 g of gum arabic, 71 g of dextrin, 5 g of palatinose, and 5 g of sodium chloride were added, and dissolved and sterilized at 85°C. This was cooled to 45°C, then 9 g of ginger flavor was added, and the mixture was stirred at 9000 rpm for 10 minutes using a TK mixer (manufactured by PRIMIX Corporation) to perform emulsifying treatment. The obtained emulsion was spray-dried with a spray dryer (manufactured by OHKAWARA KAKOHKI CO., LTD.) under the conditions of an inlet temperature of 170°C and an outlet temperature of 80°C to obtain a ginger powdered flavor.

### <Comparative Example 7>

To 233 g of water, 10 g of gum arabic and 81 g of dextrin were added, and dissolved and sterilized at 85°C. This was cooled to 45°C, then 9 g of ginger flavor was added, and thereafter, the same operation as in Example 9 was performed to obtain a ginger powdered flavor.

### <Test Results>

The powdered flavors obtained in Examples and Comparative Examples were each charged in a sealable container and stored at 50°C for 60 days. Similarly, a powdered flavor was charged in a sealable container and stored at -20°C for 60 days to obtain a control product. The powdered flavor after storage was used to prepare an aqueous solution having a concentration of 0.1%, and a sensory test was conducted by seven expert panelists. Tables present the results.

**Table 1**

| No. | Sample | Result of Sensory Evaluation |
|---|---|---|
| 1 | Example 1 | No deteriorated odor is felt compared to control |
| 2 | Example 2 | No deteriorated odor is felt compared to control |
| 3 | Example 3 | No deteriorated odor is felt compared to control |
| 4 | Example 4 | No deteriorated odor is felt compared to control |
| 5 | Example 5 | No deteriorated odor is felt compared to control |
| 6 | Example 6 | No deteriorated odor is felt compared to control |
| 7 | Example 7 | No deteriorated odor is felt compared to control |
| 8 | Example 8 | No deteriorated odor is felt compared to control |
| 9 | Example 9 | No deteriorated odor is felt compared to control |
| 10 | Comparative Example 1 | Deteriorated odor is strongly felt compared to control |
| 11 | Comparative Example 2 | Deteriorated odor is strongly felt compared to control |
| 12 | Comparative Example 3 | Deteriorated odor is strongly felt compared to control |
| 13 | Comparative Example 4 | Deteriorated odor is strongly felt compared to control |
| 14 | Comparative Example 5 | Deteriorated odor is strongly felt compared to control |
| 15 | Comparative Example 6 | Deteriorated odor is slightly felt compared to control |
| 16 | Comparative Example 7 | Deteriorated odor is slightly felt compared to control |

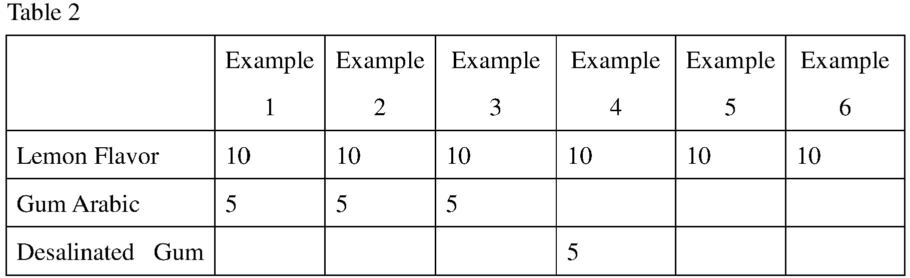

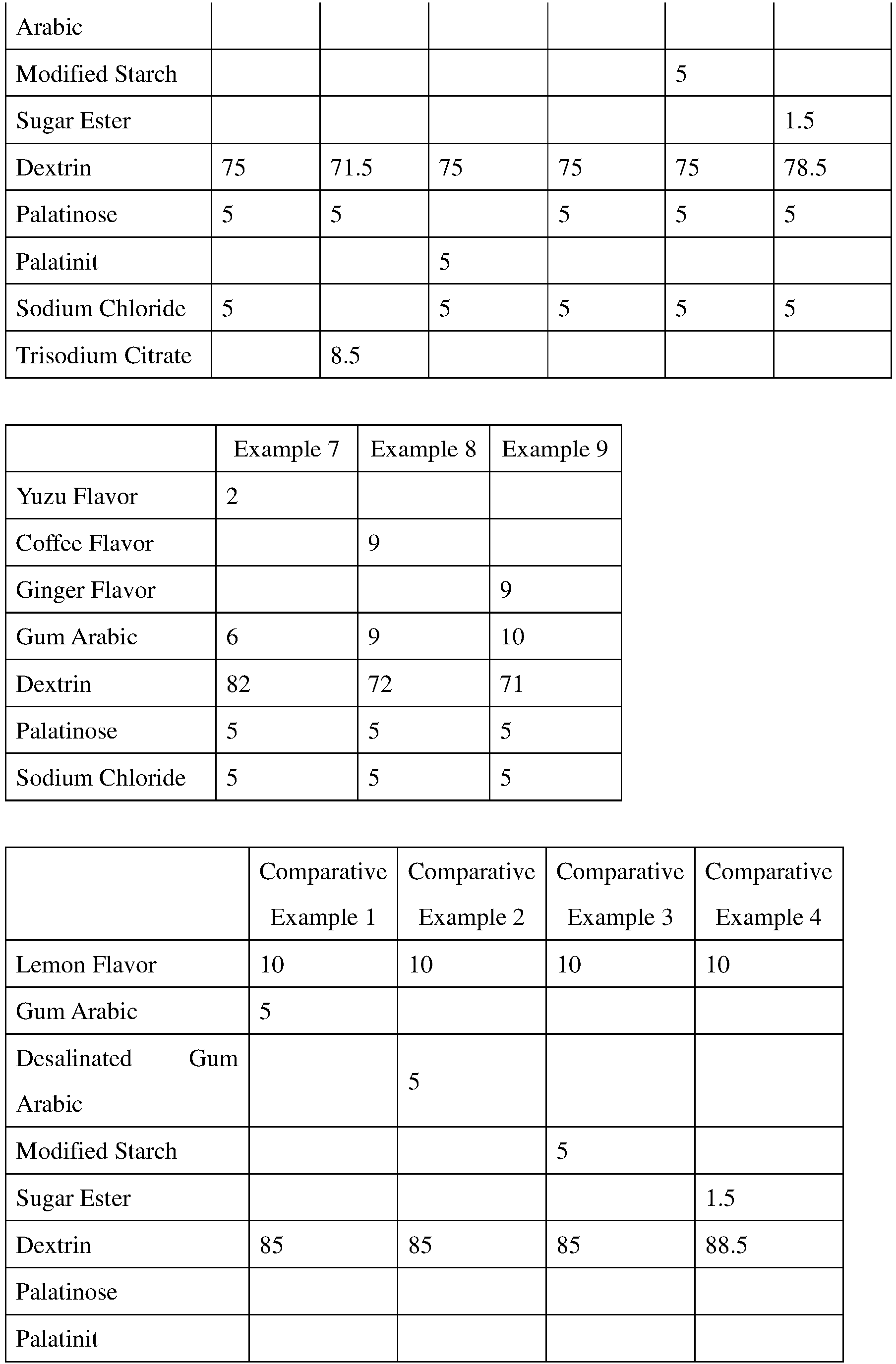

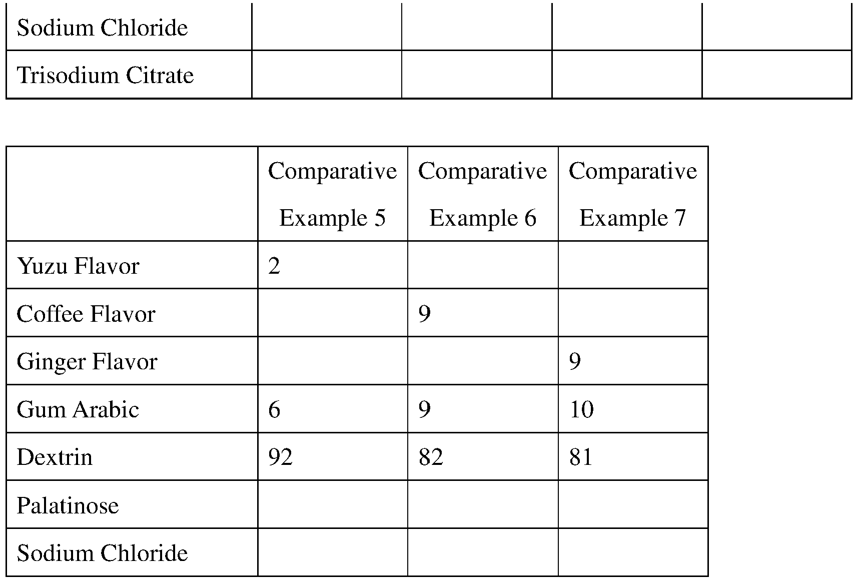

## Claims

1. A spray-dried composition comprising the following (A), (B), and (C):
(A) one or more selected from flavors and food ingredients;
(B) one or more selected from excipients and combinations of excipients and emulsifiers; and
(C) a sodium salt(s).

2. The spray-dried composition according to claim 1, further comprising (D) one or more selected from oligosaccharides and sugar alcohols produced by reduction of oligosaccharides.

3. The spray-dried composition according to claim 2, wherein the oligosaccharides and the sugar alcohols produced by reduction of oligosaccharides are disaccharides, trisaccharides, or sugar alcohols produced by reduction of disaccharides or trisaccharides.

4. The spray-dried composition according to any one of claims 1 to 3, wherein the sodium salt(s) is at least one selected from the group consisting of sodium chloride, trisodium citrate, sodium ascorbate, sodium gluconate, sodium glutamate, sodium succinate, sodium acetate, sodium lactate, sodium malate, sodium tartrate, sodium fumarate, and sodium erythorbate.

5. The spray-dried composition according to any one of claims 1 to 4, wherein a composition ratio of sodium in the spray-dried composition is 0.3% by weight to 10% by weight.

6. A method of producing the spray-dried composition according to any one of claims 1 to 5, comprising: homogeneously dissolving (A), (B), (C), and (D) in water.

7. A food or drink comprising the spray-dried composition according to any one of claims 1 to 5.
